# EUROPEAN PATENT SPECIFICATION

(11) **EP 2 824 309 B1**
(45) Date of publication and mention of the grant of the patent: **23.08.2017**
(21) Application number: 14173932.6
(22) Date of filing: 25.06.2014
(51) Int. Cl.: F02M 21/02, F02M 61/18, F16K 1/42

(54) **Valve seat for gaseous fuel injector**
Ventilsitz für Einspritzdüsen von gasförmigen Kraftstoffen
Siège de soupape pour injecteur de carburant gazeux

(30) Priority: 12.07.2013 US 201313940476
(43) Date of publication of application: 14.01.2015
(73) Proprietor: Delphi Technologies, Inc., Troy MI 48007 (US)
(72) Inventor: Fujita, Mahoro M., Fairport, NY New York 14450 (US); Dauer, Kenneth J., Lima, NY New York 14485 (US); Wells, Allan, Rochester, NY New York 14606 (US)
(74) Representative: Delphi France SAS

(56) References cited:
- WO-A1-2006/111987
- WO-A1-2012/167993
- DE-A1- 19 527 846
- DE-A1-102007 002 841
- JP-A- 2001 182 624
- US-A- 5 398 724
- US-A1- 2008 011 887
- US-A1- 2011 186 654

## Description

### TECHNICAL FIELD

The present invention relates to fuel injectors for supplying fuel to a fuel consuming device; and more particularly to fuel injectors for supplying a gaseous fuel to an internal combustion engine; and most particularly to a valve seat for such fuel injectors.

### BACKGROUND OF THE INVENTION

One type of fuel that is used to power internal combustion engines and other fuel consuming devices is a gaseous fuel such as natural gas in the form of compressed natural gas (CNG) or liquefied petroleum gas (LPG). Fuel injectors for supplying a metered amount of gaseous fuel to a fuel consuming device such as an internal combustion engine are well known. In a typical fuel injector, a valve is located in a fuel passage of the fuel injector and is axially reciprocated in and out of contact with a valve seat to control the flow of fuel through the fuel injector. There are several known configurations of interfaces between the valve and corresponding valve seat. DE19527846 discloses an injector of the prior art.

One valve and valve seat configuration is shown in United States Patent number 6,405,947. In this configuration, a spherically shaped valve is reciprocated in and out of contact with a valve seat that has a single aperture therethrough. The valve seat defines a conical seating surface with which the spherical shaped valve is able to interface in order to stop and start flow through the valve seat. While this configuration can perform satisfactorily for liquid fuels, it can often be unsatisfactory for gaseous fuels because of the higher volume flow rate that is needed for gaseous fuels. When gaseous fuels are used, the aperture is starved for fuel when the valve is first lifted from the seat because of the limited amount of fuel available at the periphery of the aperture. In order to increase the flow in this configuration, the diameter of the aperture through the seat can be increased or the valve stroke, that is the distance the valve is lifted from the seat, can be increased. However, increasing the diameter of the flow passage through the valve seat also increases the hydraulic load on the valve and therefore the fuel injector requires an actuator of increased capacity in order to overcome the increased hydraulic load. This adds cost and packaging size to the fuel injector. Increasing the amount of lift applied to the valve is also undesirable because increasing the lift will also increase the time needed to open and close the valve which results in unsatisfactory fuel injector performance. Increasing the amount of lift applied to the valve also requires an actuator of increased capacity which adds cost and packaging size to the fuel injector.

Another valve and valve seat configuration is shown in United States Patent Application Publication number 2007/0029413. In this configuration, a flat valve seat is provided with a single central aperture. A valve with a circular configuration is reciprocated in and out of contact with the flat seat to stop and start flow through the valve seat. This configuration has the same drawbacks as discussed earlier for United Stated Patent number 6,405,947.

A third valve and valve seat configuration is shown in United States Patent number 5,348,233. In this configuration, a valve seat is provided with three arcuate apertures through the valve seat and a seating surface raised above the main portion of the valve seat and surrounding the arcuate passages. The raised seating surface is defined by a discontinuous wall that surrounds each of the arcuate passages, that is, the wall has an exterior diameter that is discontinuous from an interior diameter. A flat valve with a central fuel flow passage is reciprocated in and out of contact with the raised seating surface to stop and start flow of fuel through the valve seat. When the flat valve is seated against the valve seat, the wall is not in continuous fluid communication with the entirety of the wall below the valve because the exterior diameter of the wall is discontinuous with the interior diameter. The central flow passage in the valve provides fuel to the inside diameter of the wall defining the raised seating surface. Since this configuration includes a central flow path through the valve, flow is increased without increasing hydraulic loads. This is due to the fact that fuel is available at a greater perimeter length of the passages through the valve seat as soon as the valve is moved out of contact with the valve seat. However, adding a central fuel flow passage to the valve in order to supply fuel to the interior diameter of the wall adds complexity and cost to the fuel injector. Another shortcoming of this arrangement is that the arcuate passages of the valve seat can be difficult to form using metal injection molding (MIM) and powder metal process.

A fourth valve and valve seat arrangement is shown in United States Patent Application Publication number 2011/0186654. In this configuration, a valve seat is provided with four apertures through the valve seat. The four apertures are arranged in a square pattern and each aperture is surrounded by a respective wall defining a raised seating surface. A flat valve is reciprocated in and out of contact with the raised seating surfaces to stop and start flow of fuel through the valve seat. The valve seat of this configuration does not require a central flow passage in the valve as the arrangement of United States Patent number 5,348,233 described above requires, however, the square pattern of apertures may not maximize flow and may present some challenges in forming the valve seat using metal injection molding (MIM) and powder metal process.

What is needed is a gaseous fuel injector which minimizes or eliminates one or more of the shortcomings set forth above.

### SUMMARY OF THE INVENTION

Briefly described, the present invention provides a gaseous fuel injector for supplying gaseous fuel to a fuel consuming device. The fuel injector includes a fuel inlet for receiving the gaseous fuel, a fuel outlet for dispensing the gaseous fuel from the fuel injector, a fuel passage for communicating the gaseous fuel from the fuel inlet to the fuel outlet and a valve assembly for selectively preventing and permitting the gaseous fuel to pass from the fuel inlet to the fuel outlet. The valve assembly includes a valve seat with a plurality of apertures for providing fluid communication through the valve seat. The valve assembly also includes a valve extending along a valve axis and having a sealing face for selectively preventing and permitting flow of the gaseous fuel through the valve seat by selectively engaging and disengaging the valve seat. Each one of the plurality of apertures is a radially extending slot and the plurality of apertures is arranged in a polar array centered about the valve axis.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

This invention will be further described with reference to the accompanying drawings in which:
Fig. 1 is a cross-sectional view of a portion of a fuel injector in accordance with the present invention;
Fig. 2 is an isometric partial cutaway view of a valve seat in accordance with the present invention;
Fig. 3 is a cross-sectional view of the valve seat of Figs. 1 and 2;
Fig. 4 is an axial end view of the valve seat of Figs. 1-3; and
Fig. 5 is an enlargement of a portion of Fig. 4.

### DESCRIPTION OF THE PREFERRED EMBODIMENT

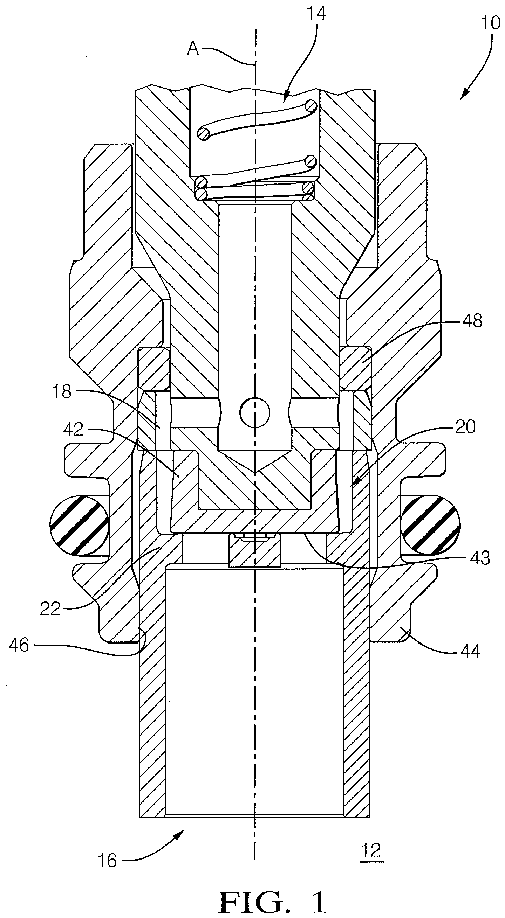

In accordance with a preferred embodiment of this invention and referring to Fig. 1, a portion of a fuel injector 10 is shown for supplying a gaseous fuel to a fuel consuming device 12 which may be, for example only, an internal combustion engine. Fuel injector 10 includes a fuel inlet 14 for receiving fuel, a fuel outlet 16 for dispensing fuel from fuel injector 10, and a fuel passage 18 for communicating fuel from fuel inlet 14 to fuel outlet 16. Fuel inlet 14 is upstream of fuel outlet 16.

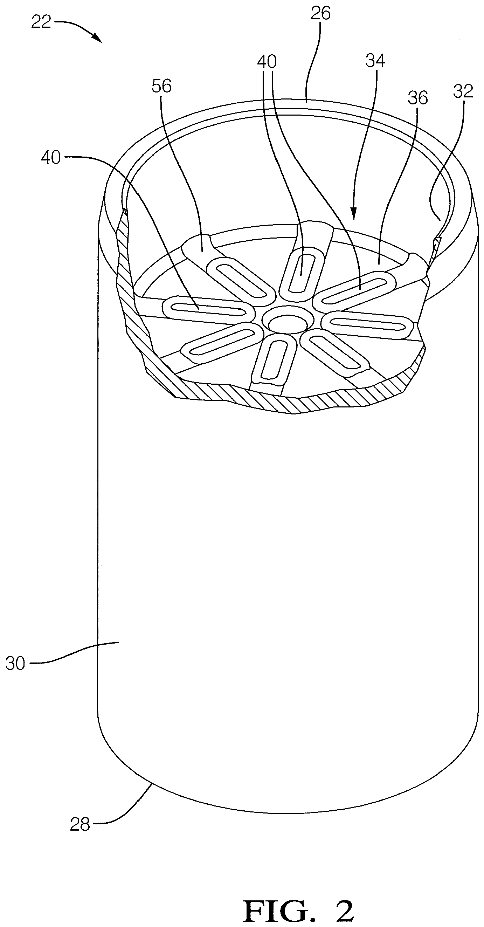

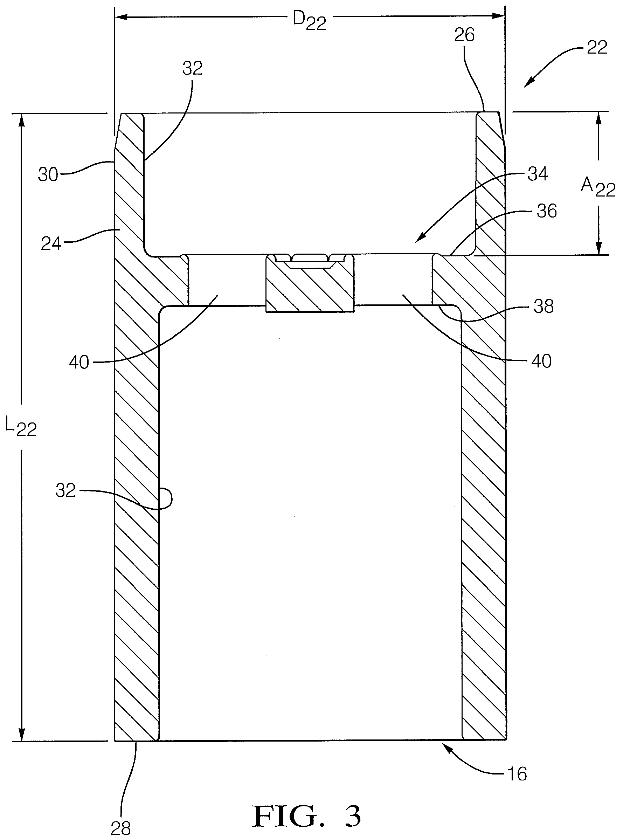

With continued reference to Fig. 1 and with additional reference to Figs. 2 and 3, a valve assembly 20 is disposed in fuel passage 18 for selectively preventing and permitting fuel to pass from fuel inlet 14 to fuel outlet 16. Valve assembly 20 includes a valve seat assembly 22 that is defined by a tubular body 24 which includes an upstream end 26 and a downstream end 28. An outside wall surface 30 and an inside wall surface 32 connect upstream end 26 to downstream end 28. Valve seat assembly 22 is further defined by a valve seat 34 which traverses inside wall surface 32. Valve seat 34 includes an upstream surface 36 which faces upstream end 26 and also includes a downstream surface 38 which faces downstream end 28. A plurality of apertures 40 are provided through valve seat 34 in order to provide fluid communication through valve seat 34. Apertures 40 will be discussed in greater detail later.

Upstream surface 36 of valve seat 34 is preferably inset from upstream end 26 of tubular body 24 by a distance A₂₂. Valve seat assembly 22 has a diameter D₂₂ that is defined by outside wall surface 30. Distance A₂₂ is preferably at least 10% of diameter D₂₂. By disposing valve seat 34 sufficiently axially inset from both upstream end 26 and downstream end 28, valve seat 34 is protected from damage during the manufacturing process and shipping because it is sheltered within tubular body 24. Damage to valve seat 34 may result in unsatisfactory leak performance of fuel injector 10 by failing to completely stop the flow of fuel from fuel inlet 14 to fuel outlet 16 when desired.

Valve seat 34 is preferably of unitary construction with tubular body 24. That is, tubular body 24 and valve seat 34 are preferably formed as a single piece without the need to join two or more separate components together. Forming tubular body 24 as a single piece with valve seat 34 eliminates the need to join valve seat 34 to tubular body 24 by additional operations such as welding valve seat 34 to tubular body 24 which could cause distortion to valve seat 34 resulting in undesired performance of fuel injector 10.

Valve assembly 20 also includes a valve 42 with a valve sealing face 43 at the axial end of valve 42 that faces toward valve seat 34. Valve 42 extends along a valve axis A and reciprocates about valve axis A. Valve 42 is disposed in fuel passage 18 for selectively preventing and permitting fuel flow through valve seat 34 by selectively engaging and disengaging valve seat 34, thereby preventing and permitting fuel to flow from fuel inlet 14 to fuel outlet 16. Selective engagement and disengagement of valve 42 with valve seat 34 is accomplished by axially reciprocating valve 42 in fuel passage 18 with an actuator (not shown). Actuators, for example solenoid actuators, for reciprocating a valve in a fuel injector are well known to those skilled in the art of fuel injectors and will not be discussed further herein.

Fuel injector 10 includes a lower housing 44 for receiving valve seat assembly 22. Upstream end 26 of tubular body 24 is disposed in a stepped bore 46 of lower housing 44. A valve guide 48 may be axially disposed between stepped bore 46 and upstream end 26 of tubular body 24 for guiding valve 42 in operation of fuel injector 10. Valve seat assembly 22 may be welded to lower housing 44 where outside wall surface 30 meets the end of lower housing 44. Since the weld is sufficiently distanced from valve seat 34, distortion of valve seat 34 due to the heat generated during the welding operation is unlikely and therefore does not affect the alignment of valve 42 with valve seat 34.

Valve seat assembly 22 has a length L₂₂ that extends from upstream end 26 to downstream end 28. Preferably, valve seat assembly 22 has a length L₂₂ to diameter D₂₂ ratio that allows for centerless grinding of outside wall surface 30. Preferably, the ratio of length L₂₂ to diameter D₂₂ is at least 1 to 1. Outside wall surface 30 may be centerless ground in order to provide the close tolerance fit with stepped bore 46 of lower housing 44 that is needed in order to establish the precise interface (concentricity and/or perpendicularity) of valve seat 34 with valve 42 to achieve the desired performance of fuel injector 10.

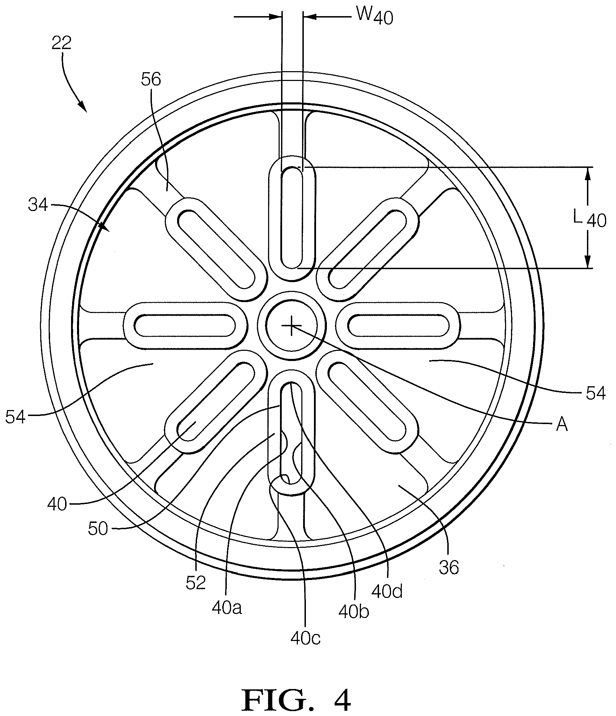

Reference will now be made to Figs. 2, 3, and 4 for a detailed description of apertures 40. Apertures 40, in the form of elongated slots, are preferably defined by straight sections 40a, 40b that are substantially straight and substantially parallel to each other. Apertures 40 may be further defined by arcuate sections 40c, 40d that connect straight sections 40a, 40b at opposing ends thereof. Apertures 40 in valve seat 34 have a length L₄₀ and width W₄₀ where length L₄₀ is greater than width W₄₀. The ratio of length L₄₀ to width W₄₀ is preferably as large as possible to maximize the perimeter of aperture 40 for a given area of aperture 40. Arcuate sections 40c, 40d together preferably do not make up more than one fourth of length L₄₀ of aperture 40 while considering aperture 40 to be a straight slot. Each aperture 40 extends radially on valve seat 34 and apertures 40 are arranged in a polar array centered about valve axis A. Apertures 40 in the form of elongated slots allow valve seat 34 to be easily manufactured using metal injection molding or powder metal process because the material used to make valve seat 34 may be injected into a mold (not shown) through a gate at the center of valve seat 34 and the material can easily flow radially outward to fill the mold because apertures 40 are narrow in the direction of flow of the material. Metal injection molding or powder metal process also allows valve seat 34 and its related features to be net formed with little or no further processing.

Each aperture 40 includes a raised seating surface 50 that extends above upstream surface 36 of valve seat 34 such that raised seating surfaces 50 all lie in a common plane. When valve 42 is engaged with valve seat 34, valve sealing face 43 seals against raised seating surface 50 of each aperture 40 to prevent fuel flow through valve seat 34. Each raised seating surface 50 is defined by a raised sealing wall 52 which continuously surrounds a respective aperture 40. Each raised sealing wall 52 extends above upstream surface 36 such that raised seating surfaces 50 are coplanar. Each raised sealing wall 52 may have sloped or inclined sides relative to valve seat upstream surface 36, or may alternatively be substantially perpendicular to valve seat upstream surface 36. By providing valve seat 34 with apertures 40 which are elongate slots, the ratio of the sum of perimeter length of each raised sealing wall 52 to the sum of area of each aperture 40 increases thereby allowing a greater amount of fuel to be immediately available to each aperture 40 as soon as valve 42 is disengaged from valve seat 34.

Each aperture 40 begins radially outward from valve axis A sufficiently far as to allow adequate spacing between raised sealing walls 52 of adjacent apertures 40 to allow fuel to access the entire perimeter of each raised sealing wall 52 through spaces 54 defined by raised sealing walls 52 of adjacent apertures 40. Since apertures 40 are radially extending, spaces 54 are wedge shaped and are narrower at the most radially inward portion of apertures 40. However, the most radially inward portion of spaces 54 is sufficiently wide to allow adequate flow of fuel to reach the entire perimeter of each raised sealing wall 52 without reducing the pressure of the fuel at the radially inward portion of apertures 40. When valve sealing face 43 is engaged with raised seating surface 50 of each raised sealing wall 52, spaces 54 continue to admit fuel flow around the entire perimeter of each raised sealing wall 52 (due to sufficient height of each raised sealing wall 52), and thereby into each aperture 40 as soon as valve 42 is disengaged from valve seat 34. This results in increased flow without increasing the aperture area and without increasing the valve stroke.

Valve seat assembly 22 is preferably made from the process of metal injection molding or powder metal process. Using metal injection molding or powder metal process allows valve seat assembly 22 to be net formed with little or no further processing required to complete valve seat 34 and apertures 40. As mentioned previously, apertures 40 in the form of elongated, radially extending slots allow valve seat 34 to be easily manufactured using metal injection molding or powder metal process because the material used to make valve seat 34 may be injected into a mold (not shown) through a gate at the center of valve seat 34 and the material can easily flow radially outward to fill the mold because apertures 40 are narrow in the direction of flow of the material. In order to ease the metal injection molding or powder metal process, a flow rib 56 may extend radially outward from each raised sealing wall 52. Each flow rib 56 extends above upstream surface 36, but to a lesser extent than each raised sealing wall 52, i.e. each flow rib 56 is lower than each raised sealing wall 52. Each flow rib 56 allows the material used to make valve seat 34 to more easily flow radially outward within the mold because there is less restriction to the flow of material within the mold. Metal injection molding or powder metal process also allows valve seat 34 and its related features to be net formed with little or no further processing.

CFD (computational flow dynamics) simulation was completed in order to compare the flow through valve seat 34 and the flow through a valve seat as shown in United States Patent Application Publication number 2011/0186654 which includes four slot-shaped apertures arranged in a square pattern. While valve seat 34 includes eight slots and the valve seat of United States Patent Application Publication number 2011/0186654 includes four slots, the sum of flow area (sum of flow area of all of the slots) for each valve seat used in CFD simulation was substantially the same and the valve lift of each arrangement used in CFD simulation was also substantially the same, thereby resulting in equal hydraulic loads required to actuate the valve for each arrangement being evaluated. The results of the CFD simulation show that valve seat 34 produces a flow that is about 24% greater for the same hydraulic load.

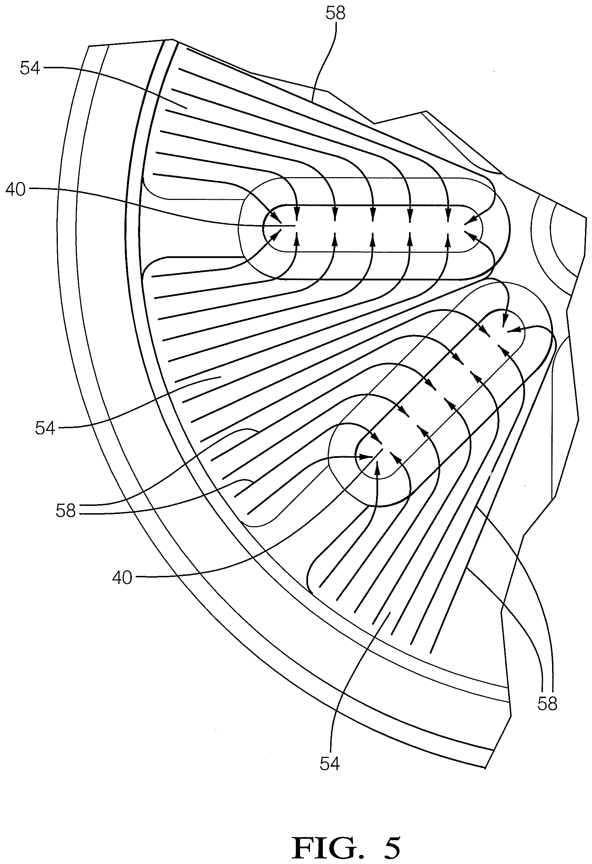

Reference will now be made to Fig. 5 which shows an enlarged view of two apertures 40. As illustrated by flow arrows 58, fuel is efficiently directed radially inward via spaces 54. In this way, fuel substantially equal in pressure is available for the entire perimeter of each aperture 40, thereby allowing greater flow of fuel out of fuel injector 10 since no portion of the perimeter of apertures 40 is starved of fuel when valve 42 is raised from raised seating surface 50.

While valve seat 34 has been illustrated as being unitary construction with tubular body 24, it should be understood that valve seat 34 may alternatively be made as a separate piece and joined to tubular body 24. Also alternatively, tubular body 24 may be omitted and valve seat 34 may be secured directly within stepped bore 46 of lower housing 44.

While this invention has been described in terms of the preferred embodiments thereof, it is not intended to be so limited, but rather only to the extent set forth in the claims that follow.

## Claims

1. A gaseous fuel injector (10) for supplying gaseous fuel to a fuel consuming device (12), said fuel injector (10) comprising:
a fuel inlet (14) for receiving said gaseous fuel;
a fuel outlet (16) for dispensing said gaseous fuel from said fuel injector (10);
a fuel passage (18) for communicating said gaseous fuel from said fuel inlet (14) to said fuel outlet (16);
a valve assembly (20) for selectively preventing and permitting said gaseous fuel to pass from said fuel inlet (14) to said fuel outlet (16), said valve assembly (20) comprising:
a valve seat (34) with a plurality of apertures (40) for providing fluid communication through said valve seat (34);
a valve (42) extending along a valve axis (A) and having a sealing face (43) for selectively preventing and permitting flow of said gaseous fuel through said valve seat (34) by selectively engaging and disengaging said valve seat (34);
wherein each one of said plurality of apertures (40) is a radially extending slot and said plurality of apertures (40) is arranged in a polar array centered about said valve axis (A) and,
wherein each one of said plurality of apertures (40) is surrounded by a raised sealing wall (52) whereby said valve (42) engages said raised sealing wall (52) of each one of said plurality of apertures (40) to prevent flow of said gaseous fuel through said valve seat (34) and whereby said raised sealing wall (52) of each one of said plurality of apertures (40) is circumferentially surrounded by said gaseous fuel when said valve (42) is engaged with said raised sealing wall (52) of each one of said plurality of apertures (40) and, **characterized in that** a flow rib (56) extends radially outward from said raised sealing wall (52) of each one of said plurality of apertures (40) such that said flow rib (56) is lower than said raised sealing wall (52).

2. A fuel injector (10) as in claim 1 wherein each one of said plurality of apertures (40) is equiangularly spaced.

3. A fuel injector (10) as in claim 1 wherein said sealing face (43) is planar and substantially perpendicular to said valve (42) axis.

4. A fuel injector (10) as in claim 1 wherein said sealing face (43) of said valve (42) contacts said raised sealing wall (52) of each one of said plurality of apertures (40) in a common plane.

5. A fuel injector (10) as in claim 4 wherein said plane is substantially perpendicular to said valve axis (A).

## Patentansprüche

1. Ein "gasförmiger Kraftstoff"-Injektor (10) zum Liefern von gasförmigem Kraftstoff an eine Kraftstoffverbrauchsvorrichtung (12), wobei der Kraftstoffinjektor (10) aufweist:
einen Kraftstoffeinlass (14) zum Aufnehmen des gasförmigen Kraftstoffs;
einen Kraftstoffauslass (16) zum Abgeben des gasförmigen Kraftstoffs aus dem Kraftstoffinjektor (10);
einen Kraftstoffdurchlass (18) zum Übertragen des gasförmigen Kraftstoffs von dem Kraftstoffeinlass (14) zu dem Kraftstoffauslass (16);
eine Ventilanordnung (20) zum selektiven Verhindern und Zulassen, dass der gasförmige Kraftstoff von dem Kraftstoffeinlass (14) zu dem Kraftstoffauslass (16) gelangt, wobei die Ventilanordnung (20) aufweist:
einen Ventilsitz (34) mit einer Vielzahl von Öffnungen (40) zum Vorsehen einer Fluidverbindung durch den Ventilsitz (34);
ein Ventil (42), das sich entlang einer Ventilachse (A) erstreckt und eine Dichtfläche (43) hat zum selektiven Verhindern und Zulassen eines Flusses des gasförmigen Kraftstoffs durch den Ventilsitz (34) durch selektives Kontaktieren und Trennen des Ventilsitzes (34);
wobei jede der Vielzahl von Öffnungen (40) ein sich radial erstreckender Schlitz ist und die Vielzahl von Öffnungen (40) in einer Polaranordnung angeordnet ist, die um die Ventilachse (A) zentriert ist, und
wobei jede der Vielzahl von Öffnungen (40) von einer erhöhten Dichtungswand (52) umgeben ist, wobei das Ventil (42) die erhöhte Dichtungswand (52) von jeder der Vielzahl von Öffnungen (40) kontaktiert, um einen Fluss des gasförmigen Kraftstoffs durch den Ventilsitz (34) zu verhindern, und wobei die erhöhte Dichtungswand (52) von jeder der Vielzahl von Öffnungen (40) in Umfangsrichtung von dem gasförmigen Kraftstoff umgeben ist, wenn das Ventil (42) mit der erhöhten Dichtwand (52) von jeder der Vielzahl von Öffnungen (40) in Kontakt ist, und
**dadurch gekennzeichnet, dass**
sich eine Strömungsrippe (56) radial nach außen von der erhöhten Dichtungswand (52) von jeder der Vielzahl von Öffnungen (40) erstreckt derart, dass die Strömungsrippe (56) niedriger als ist die erhöhte Dichtwand (52).

2. Ein Kraftstoffinjektor (10) gemäß Anspruch 1, wobei jede der Vielzahl von Öffnungen (40) gleichwinklig beabstandet ist.

3. Ein Kraftstoffinjektor (10) gemäß Anspruch 1, wobei die Dichtfläche (43) eben und im Wesentlichen senkrecht zu der Achse des Ventils (42) ist.

4. Ein Kraftstoffinjektor (10) gemäß Anspruch 1, wobei die Dichtfläche (43) des Ventils (42) die erhöhte Dichtungswand (52) von jeder der Vielzahl von Öffnungen (40) in einer gemeinsamen Ebene kontaktiert.

5. Ein Kraftstoffinjektor (10) gemäß Anspruch 4, wobei die Ebene im Wesentlichen senkrecht zu der Ventilachse (A) ist.

## Revendications

1. Injecteur de carburant gazeux (10) pour alimenter un carburant gazeux à un dispositif de consommation de carburant (12), ledit injecteur de carburant (10) comprenant :
une entrée de carburant (14) pour recevoir ledit carburant gazeux ;
une sortie de carburant (16) pour distribuer ledit carburant gazeux depuis ledit injecteur de carburant (10) ;
un passage de carburant (18) pour communiquer ledit carburant gazeux depuis ladite entrée de carburant (14) vers ladite sortie de carburant (16) ;
un assemblage formant valve (20) pour empêcher et pour permettre sélectivement audit carburant gazeux de passer depuis ladite entrée de carburant (14) vers ladite sortie de carburant (16), ledit assemblage formant valve (20) comprenant :
un siège de valve (34) avec une pluralité d'ouvertures (40) pour assurer une communication fluidique à travers ledit siège de valve (34) ;
une valve (42) s'étendant le long d'un axe de valve (A) et ayant une face d'étanchement (43) pour empêcher et pour permettre sélectivement un écoulement dudit carburant gazeux à travers ledit siège de valve (34) en engageant et en désengageant sélectivement ledit siège de valve (34) ;
dans lequel chacune de ladite pluralité d'ouvertures (40) est une fente s'étendant radialement et ladite pluralité d'ouvertures (40) sont agencées dans un réseau polaire centré autour dudit axe de valve (A), et
dans lequel chacune de ladite pluralité d'ouvertures (40) est entourée par une paroi d'étanchement dressée (52), de sorte que ladite valve (42) engage ladite paroi d'étanchement dressée (52) de chacune de ladite pluralité d'ouvertures (40) pour empêcher un écoulement dudit carburant gazeux à travers ledit siège de valve (34), et de sorte que ladite paroi d'étanchement dressée (52) de chacune de ladite pluralité d'ouvertures (40) est entourée de manière circonférentielle par ledit carburant gazeux quand ladite valve (42) est engagée avec ladite paroi d'étanchement dressée (52) de chacune de ladite pluralité d'ouvertures (40), et
**caractérisé en ce que**
une nervure d'écoulement (56) s'étend radialement vers l'extérieur depuis ladite paroi d'étanchement dressée (52) de chacune de ladite pluralité d'ouvertures (40) de sorte que ladite nervure d'écoulement (56) est plus basse que ladite paroi d'étanchement dressée (52).

2. Injecteur de carburant (10) selon la revendication 1, dans lequel chacune de ladite pluralité d'ouvertures (40) est espacée à angles égaux.

3. Injecteur de carburant (10) selon la revendication 1, dans lequel ladite face d'étanchement (43) est plane et sensiblement perpendiculaire audit axe de valve (42).

4. Injecteur de carburant (10) selon la revendication 1, dans lequel ladite face d'étanchement (43) de ladite valve (42) vient en contact avec ladite paroi d'étanchement dressée (52) de chacune de ladite pluralité d'ouvertures (40) dans un plan commun.

5. Injecteur de carburant (10) selon la revendication 4, dans lequel ledit plan est sensiblement perpendiculaire audit axe de valve (A).
